# EUROPÄISCHE PATENTSCHRIFT

(11) **EP 1 834 841 B1**
(45) Veröffentlichungstag und Bekanntmachung des Hinweises auf die Patenterteilung: **13.07.2011**
(21) Anmeldenummer: 07104327.7
(22) Anmeldetag: 16.03.2007
(51) Int. Cl.: B60R 16/02, B60R 25/00, E05B 19/00, G07C 9/00

(54) **Schlüssel für ein Kraftfahrzeug**
Key for a motor vehicle
Clé pour véhicule automobile

(30) Priorität: 16.03.2006 DE 10612143; 13.04.2006 DE 10617507
(43) Veröffentlichungstag der Anmeldung: 19.09.2007
(60) Teilanmeldung: 08015499.0
(73) Patentinhaber: GM Global Technology Operations, Inc., Detroit, MI 48265-3000 (US)
(72) Erfinder: Kleinz, Michael, 65239 Hochheim (DE)
(74) Vertreter: Strauss, Peter

(56) Entgegenhaltungen:
- DE-A1- 10 341 606
- DE-C1- 19 513 498
- DE-U1- 20 023 317
- US-A1- 2003 231 550
- ANONYMOUS: "SEG MP 56-512 Erfahrungsberichte" INTERNET ARTICLE, [Online] 29. November 2005 (2005-11-29), XP002437225 Gefunden im Internet: URL:http://www.ciao.de/SEG_MP_56_512__2180 468> [gefunden am 2007-06-14]
- ANONYMOUS: "Schlüsselanhänger als MP3-Player" INTERNET ARTICLE, [Online] 29. Juli 2002 (2002-07-29), XP002437226 Gefunden im Internet: URL:http://www.macwelt.de/news/vermischtes /310984/index.html> [gefunden am 2007-06-14]

## Beschreibung

Die vorliegende Erfindung betrifft einen Schlüssel für ein Kraftfahrzeug mit einer Abspielvorrichtung für Unterhaltungsmedien, wie Musik oder Videos und/oder mit einer Aufnahmevorrichtung zum Aufnehmen von Bildern, wie Fotos oder Videos.

Das technische Gebiet der vorliegenden Erfindung betrifft einen Schlüssel für ein Kraftfahrzeug, wobei der Schlüssel u. a. Speichermittel zum Speichern von Daten aufweist.

Derartige Schlüssel für Kraftfahrzeuge oder Fahrzeugschlüssel sind beispielsweise in der DE 10 2004 025 886 A1 oder der DE 199 19 501 A1 beschrieben.

Dabei beschreibt die Druckschrift DE 10 2004 025 886 A1 einen Schlüssel für ein Kraftfahrzeug mit einem Speichermittel zum Speichern von Daten, wobei der Schlüssel eine mit dem Speichermittel gekoppelte Schnittstelle zum Anschluss einer Übertragungsleitung zur Übertragung von Daten von und/oder zu dem Speichermittel umfasst.

Die Druckschrift DE 199 19 501 A1 zeigt eine Vorrichtung zur Speicherung von betriebsabhängigen Fahrzeugdaten in einem entnehmbaren Speicherelement. Dabei werden Fahrzeugdaten wie beispielsweise Kilometerstand, Tankinhalt oder Durchschnittsverbrauch in dem Speicherelement gespeichert und außerhalb des Fahrzeuges beispielsweise einem Flottenmanagement-System zur Verfügung gestellt.

Nachteiligerweise kann ein Nutzer der herkömmlichen, wie oben beschriebenen Kraftfahrzeugschlüssel diese ausschließlich für Kraftfahrzeug-bezogene Funktionalitäten, wie Kilometerstandsanzeige, Tankinhaltsanzeige, Zentralverriegelungsfunktion oder Wegfahrsperrefunktion nutzen.

Herkömmliche Kraftfahrzeugsschlüssel sind also nur für Kraftfahrzeug-bezogene Funktionalitäten nützlich. Obwohl der Nutzer seinen Kraftfahrzeugschlüssel beispielsweise an seinem Schlüsselbund in der Regel mit sich führt, ist ein herkömmlicher Kraftfahrzeugschlüssel in vielen Situationen des alltäglichen Lebens, wie bleispielsweise beim Einkaufen, beim Busfahren oder beim Spazierengehen völlig nutzlos.

Aus der gattungsbildenden US-A-2006/0049922 ist einen mechanischen Schlüssel und einen Schlüsselanhänger bekannt, wobei der Schlüsselanhänger als elektrischen Schlüssel und als Abspielvorrichtung von Unterhaltungsmedien dienen kann.

Der vorliegenden Erfindung liegt die Aufgabe zugrunde, die Funktionalität des Abspielens von Unterhaltungsmedien, wie beispielsweise Musik oder Videos, für einen Schlüssel, insbesondere einen Kraftfahrzeugschlüssel, bereitzustellen.

Erfindungsgemäß wird die gestellte Aufgabe durch einen Schlüssel mit den Merkmalen des Patentanspruchs 1 gelöst.

Der erfindungsgemäße Kraftfahrzeugschlüssel mit der Abspielvorrichtung ist vorteilhafterweise dazu geeignet, sowohl Kraftfahrzeug-bezogene Funktionalitäten, wie das Öffnen und Schließen des Kraftfahrzeuges oder das Betätigen der Zündung des Kraftfahrzeuges, als auch die Funktionalität des Abspielens von Unterhaltungsmedien, wie beispielsweise Musik oder Videofilmen, dem Nutzer bereitzustellen. Somit kann der Nutzer den erfindungsgemäßen Kraftfahrzeugschlüssel auch in vielen Situationen des täglichen Lebens, in welchen ein herkömmlicher Kraftfahrzeugschlüssel unnütz ist und doch von dem Nutzer mitgeführt wird, für seine Unterhaltung nutzen.

Der mit der Abspielvorrichtung koppelbare Kraftfahrzeugschlüssel gemäß der vorliegenden Erfindung besitzt ebenfalls den besonderen Vorteil, insbesondere in einem gekoppelten Zustand Kraftfahrzeug-bezogene Funktionalitäten und die Funktionalität des Abspielens von Unterhaltungsmedien durchführen zu können. Des Weiteren kann der Nutzer den Kraftfahrzeugschlüssel auch von der Abspielvorrichtung entkoppeln, um beide getrennt voneinander zu nutzen. Auch kann der Nutzer zu einem ersten Zeitpunkt nur den mit der Abspielvorrichtung koppelbaren Kraftfahrzeugschlüssel erwerben, um zu einem zweiten Zeitpunkt die mit dem Kraftfahrzeugschlüssel koppelbare Abspielvorrichtung nachzukaufen.

Der erfindungsgemäße Kraftfahrzeugschlüssel mit der Aufnahmevorrichtung ist vorteilhafterweise dazu geeignet, sowohl Kraftfahrzeug-bezogene Funktionalitäten, wie das Öffnen und Schließen des Kraftfahrzeuges oder das Betätigen der Zündung des Kraftfahrzeuges, als auch die Funktionalität des Aufnehmens und Speicherns von Fotos oder Videos dem Nutzer bereitzustellen. Somit kann der Nutzer den erfindungsgemäßen Kraftfahrzeugschlüssel auch in vielen Situationen des täglichen Lebens, in welcher ein herkömmlicher Kraftfahrzeugschlüssel unnütz ist und doch von dem Benutzer mitgeführt wird, für seine Unterhaltung nutzen.

Der mit der Aufnahmevorrichtung koppelbare Kraftfahrzeugschlüssel gemäß der vorliegenden Erfindung besitzt ebenfalls den besonderen Vorteil, insbesondere in einem gekoppelten Zustand Kraftfahrzeug-bezogene Funktionalitäten und die Funktionalität des Aufnehmens und Speicherns von Fotos und Videos durchführen zu können. Des Weiteren kann der Nutzer den Kraftfahrzeugschlüssel auch von der Aufnahmevorrichtung entkoppeln, um beide getrennt von einander zu nutzen. Auch kann der Nutzer zu einem ersten Zeitpunkt nur den mit der Aufnahmevorrichtung koppelbaren Kraftfahrzeugschlüssel erwerben, um zu einem zweiten Zeitpunkt die mit dem Kraftfahrzeugschlüssel koppelbare Aufnahmevorrichtung nachzukaufen.

Vorteilhafte Ausgestaltungen und Weiterbildungen der Erfindung ergeben sich aus den Unteransprüchen sowie der Beschreibung unter Bezugnahme auf die Zeichnungen.

Gemäß einer weiteren bevorzugten Ausgestaltung ist die Unterhaltungsdatei als eine Audiodatei, beispielsweise als ein Musikstück oder als ein Hörbuch, oder als eine Bilddatei oder als eine Videodatei ausgebildet. Die Audiodatei ist dabei insbesondere in einem MP3-Format formatiert. Das Unterhaltungsmedium kann vorzugsweise als ein Audiostück, wie beispielsweise ein Musikstück, oder als ein Videofilm oder als ein Bild, das beispielsweise im JPEG-Format formatiert ist, ausgebildet sein.

In einer bevorzugten Ausgestaltung weist die Schlüsselvorrichtung eine elektronische Zentralverriegelungsfunktion und/oder eine elektronische Wegfahrsperrefunktion und/oder eine elektronische Zündungsfunktion auf.

In einer bevorzugten Ausgestaltung ist der Schlüsselbart mittels einer Einklappvorrichtung in ein Gehäuse des Schlüssels einklappbar ausgebildet. Vorteilhafterweise spart dies beim Transport des Schlüssels Platz ein.

In einer bevorzugten Ausgestaltung weist die Speichervorrichtung einen Schreibe-/Lesespeicher und/oder einen Kartensteckplatz zum Einstecken einer Speicherkarte auf. Beispielsweise kann der Nutzer die Speicherkarte in einen entsprechenden Kartensteckplatz eines Personalcomputers einstecken, die Speicherkarte mit Unterhaltungsmedien, wie beispielsweise MP3-Files, beschreiben und die Speicherkarte anschließend in den Kartensteckplatz der Speichervorrichtung des Schlüssels einstecken, sodass die auf der Speicherkarte gespeicherten MP3-Files mittels des erfindungsgemäßen Schlüssels abgespielt werden können.

In einer bevorzugten Ausgestaltung weist die Wiedergabevorrichtung einen Lautsprecher und/oder ein Display und/oder eine Steckerbuchse auf, in welche ein Kopfhörer und/oder in welche ein externer Lautsprecher und/oder in welche ein Verbindungskabel zum Anschluss an ein Infotainment-System des Kraftfahrzeuges einsteckbar ist/sind.

In einer bevorzugten Ausgestaltung weist der Schlüssel eine Aufnahmevorrichtung zum Aufnehmen von Bildern auf.

In einer bevorzugten Ausgestaltung weist die Aufnahmevorrichtung eine Fotovorrichtung mit einer Fotolinse auf, welche dazu ausgelegt ist, zumindest ein analoges Bild aufzunehmen und in eine digitale Bilddatei zu wandeln und/oder eine Speichervorrichtung aufweist, welche dazu ausgelegt ist, zumindest die digitale Bilddatei zu speichern. Vorteilhafterweise weist der erfindungsgemäße Schlüssel durch die Integration der Fotovorrichtung neben den Kraftfahrzeug-bezogenen Funktionalitäten und der Funktionalität des Abspielens von Audio- und/oder Bilddaten auch eine Fotofunktion auf.

In einer bevorzugten Ausgestaltung ist die Fotovorrichtung mit der Speichervorrichtung zum Speichern eines von der Fotovorrichtung aufgenommenen Bildes gekoppelt. Somit kann vorteilhafterweise das aufgenommene Bild gespeichert werden und anderen Vorrichtungen, beispielsweise einem Computer, mittels der Speicherkarte oder mittels der Schnittstellenvorrichtung bereitgestellt werden.

In einer bevorzugten Ausgestaltung weist die Aufnahmevorrichtung eine optische Wiedergabevorrichtung auf, welche die digitale Bilddatei visuell darstellt. Vorteilhafterweise hat somit der Nutzer die Möglichkeit, die aufgenommen Fotos oder Videos mittels des erfindungsgemäßen Schlüssels sofort anzusehen.

In einer bevorzugten Ausgestaltung ist eine Wandlervorrichtung zwischen der Speichervorrichtung und der Wiedergabevorrichtung angeordnet, welche die digitale Bilddatei in ein durch die Wiedergabevorrichtung visuell darstellbares Format wandelt.

In einer bevorzugten Ausgestaltung weist die Aufnahmevorrichtung ein Mikrophon auf, welches ein akustisches Signal aufnimmt und in eine digitale Audiodatei wandelt und die Speichervorrichtung die digitale Audiodatei speichert.

In einer bevorzugten Ausgestaltung weist die Abspieleinrichtung und/oder die Aufnahmevorrichtung eine Bedienvorrichtung auf, mittels welcher zumindest ein Steuerbefehl zur Steuerung der Speichervorrichtung und/oder der Wiedergabevorrichtung und/oder der Fotovorrichtung und/oder des Mikrophons eingebbar ist und welche dazu ausgelegt ist, die Speichervorrichtung und/oder die Wiedergabevorrichtung und/oder die Fotovorrichtung und/oder das Mikrophon zu steuern. Vorteilhafterweise ist somit die Abspielvorrichtung und/oder die Aufnahmevorrichtung mittels der von dem Nutzer getätigten Eingaben (Steuerbefehle) steuerbar. Vorzugsweise weist die Bedienvorrichtung mehrere Funktionstasten, beispielsweise eine Play-Taste, eine Skip-Forward-Taste, eine Skip-Backward-Taste oder eine Pause-Taste auf.

In einer bevorzugten Ausgestaltung weist die Bedienvorrichtung zumindest eine Funktionstaste zum Eingeben zumindest eines Steuerbefehl und eine mit der Funktionstaste gekoppelte Steuervorrichtung auf, welche den eingegebenen Steuerbefehl empfängt und mittels des empfangenen Steuerbefehls die Speichervorrichtung und/oder die Wiedergabevorrichtung steuert. Vorzugsweise weist die Bedienvorrichtung mehrere Funktionstasten, beispielsweise eine Play-Taste, eine Skip-Forward-Taste, eine Skip-Backward-Taste oder eine Pause-Taste auf.

In einer bevorzugten Ausgestaltung steuert die Steuervorrichtung die Fotovorrichtung, das Mikrophon und die Speichervorrichtung mittels der Steuerbefehle derart, dass die Speichervorrichtung die von der Fotovorrichtung aktuell bereitgestellte Bilddatei und die von dem Mikrophon aktuell bereitgestellte Audiodatei synchronisiert als eine Videodatei abspeichert.

In einer bevorzugten Ausgestaltung weist die Abspielvorrichtung und/oder die Aufnahmeeinrichtung eine Schnittstellenvorrichtung auf, die so angeordnet ist, dass mittels der Schnittstellenvorrichtung Daten in die Speichervorrichtung schreibbar sind und/oder aus der Speichervorrichtung auslesbar sind.

In einer bevorzugten Ausgestaltung weist die Schnittstellenvorrichtung eine USB-Schnittstelle und/oder eine Firewire-Schnittstelle und/oder eine drahtlose Schnittstelle, insbesondere eine Bluetooth-Schnittstelle oder eine Infrarot-Schnittstelle, auf.

In einer bevorzugten Ausgestaltung weist die Abspielvorrichtung und/oder die Aufnahmeeinrichtung eine Energieversorgungsvorrichtung, insbesondere eine Batterie oder ein Akkumulator, auf. Vorzugsweise versorgt die Energieversorgungsvorrichtung viele oder sämtliche Vorrichtungen der Abspielvorrichtung mit Strom.

In einer bevorzugten Ausgestaltung ist ein einziges Gehäuse vorgesehen, welches sowohl die Schlüsselvorrichtung als auch die Abspielvorrichtung und/oder die Aufnahmevorrichtung aufnimmt. Ein besonderer Vorteil liegt dabei darin, dass der Nutzer nur noch eine einzige Vorrichtung mit sich führen muss, welche sowohl Kraftfahrzeug-bezogene Funktionalitäten als auch die Funktionalität des Abspielens von Unterhaltungsmedien durchführen kann.

In einer bevorzugten Ausgestaltung ist ein erstes Gehäuseteil zur Aufnahme der Schlüsselvorrichtung und ein zweites, vom ersten Gehäuseteil unterschiedliches Gehäuseteil zur Aufnahme der Abspielvorrichtung und/oder zur Aufnahme der Aufnahmevorrichtung vorgesehen, wobei das erste und zweite Gehäuseteil über eine mechanische Koppelvorrichtung des Schlüssels miteinander gekoppelt sind. In einer bevorzugten Ausgestaltung weist die Koppelvorrichtung ein mit dem ersten Gehäuseteil verbundenes erstes Koppelelement und ein mit dem zweiten Gehäuseteil verbundenes zweites Koppelelement auf, wobei die beiden Gehäuse mittels der beiden Koppelelemente durch ein Ineinandergreifen mechanisch koppelbar sind. Vorteilhafterweise können somit die Schlüsselvorrichtung und die Abspielvorrichtung bzw. die Aufnahmevorrichtung auch getrennt voneinander genutzt werden.

Die Erfindung wird nachfolgend anhand der in den schematischen Figuren angegebenen Ausführungsbeispielen näher erläutert. Es zeigen:
- Figur 1: ein schematisches Blockschaltbild ei- nes ersten Ausführungsbeispiels des erfindungsgemäßen Schlüssels;
- Figur 2: ein schematisches Blockschaltbild ei- nes zweiten Ausführungsbeispiels des erfindungsgemäßen Schlüssels;
- Figur 3: ein schematisches Blockschaltbild ei- nes dritten Ausführungsbeispiels des erfindungsgemäßen Schlüssels;
- Figur 4a: ein schematisches Blockschaltbild ei- nes bevorzugten Ausführungsbeispiels des mit der Abspielvorrichtung kop- pelbaren Schlüssels gemäß der vorlie- genden Erfindung;
- Figur 4b: ein schematisches Blockschaltbild ei- nes bevorzugten Ausführungsbeispiels der mit der Schlüsselvorrichtung kop- pelbaren Abspielvorrichtung gemäß der vorliegenden Erfindung; und
- Figur 5: ein schematisches Blockschaltbild ei- nes bevorzugten Ausführungsbeispiels der Wiedergabevorrichtung der Ab- spielvorrichtung gemäß der vorliegen- den Erfindung;
- Figur 6: ein schematisches Blockschaltbild ei- nes vierten Ausführungsbeispiels des erfindungsgemäßen Schlüssels;
- Figur 7: ein schematisches Blockschaltbild ei- nes fünften Ausführungsbeispiels des erfindungsgemäßen Schlüssels;
- Figur 8: ein schematisches Blockschaltbild ei- nes sechsten Ausführungsbeispiels des erfindungsgemäßen Schlüssels;
- Figur 9a: ein schematisches Blockschaltbild ei- nes bevorzugten Ausführungsbeispiels der mit der Aufnahmevorrichtung kop- pelbaren Schlüsselvorrichtung gemäß der vorliegenden Erfindung;
- Figur 9b: ein schematisches Blockschaltbild ei- nes bevorzugten Ausführungsbeispiels der mit der Schlüsselvorrichtung kop- pelbaren Aufnahmevorrichtung gemäß der vorliegenden Erfindung; und
- Figur 10: ein schematisches Blockschaltbild ei- nes bevorzugten Ausführungsbeispiels der Wiedergabevorrichtung der Aufnah- mevorrichtung gemäß der vorliegenden Erfindung.

In allen Figuren sind gleiche beziehungsweise funktionsgleiche Elemente, Merkmale und Signale - sofern nichts Anderes angegeben ist - mit denselben Bezugszeichen versehen worden.

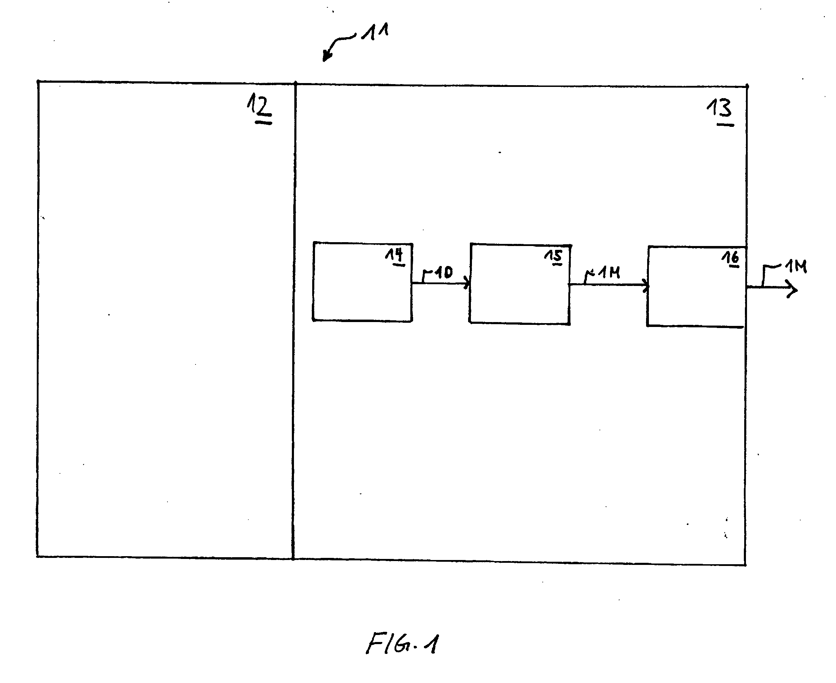

In Figur 1 ist ein schematisches Blockschaltbild eines ersten Ausführungsbeispiels des erfindungsgemäßen mechanischen und/oder elektronischen Schlüssels 11 für ein Kraftfahrzeug dargestellt.

Der mechanische und/oder elektronische Schlüssel 11 weist eine Schlüsselvorrichtung 12 und eine Abspielvorrichtung 13 zum Abspielen von Unterhaltungsmedien 1M auf. Die Abspielvorrichtung 13 beinhaltet eine Speichervorrichtung 14, eine Wandlervorrichtung 15, und eine Wiedergabevorrichtung 16. Die Speichervorrichtung 14 speichert zumindest eine Unterhaltungsdatei 1D. Die Unterhaltungsdatei 1D ist vorzugsweise als eine Audiodatei oder als eine Bilddatei oder als eine Videodatei ausgebildet. Dabei ist die Audiodatei beispielsweise in einem MP3-Format formatiert. Die Videodatei kann beispielsweise in einem MPEG-Format und die Bilddatei beispielsweise in einem JPEG-Format formatiert sein.

Die Wandlervorrichtung 15 wandelt die gespeicherte Unterhaltungsdatei 1D in ein abspielbares Unterhaltungsmedium 1M. Das abspielbare Unterhaltungsmedium 1M ist entsprechend der gespeicherten Unterhaltungsdatei 1D vorzugsweise als ein Audiostück oder Liedstück oder als ein Videofilm oder als ein Bild ausgebildet.

Weiter weist der Schlüssel 11 vorzugsweise ein Umhängeband (nicht gezeigt) auf, so dass der Nutzer den Schlüssel 11 auch um den Hals tragen kann.

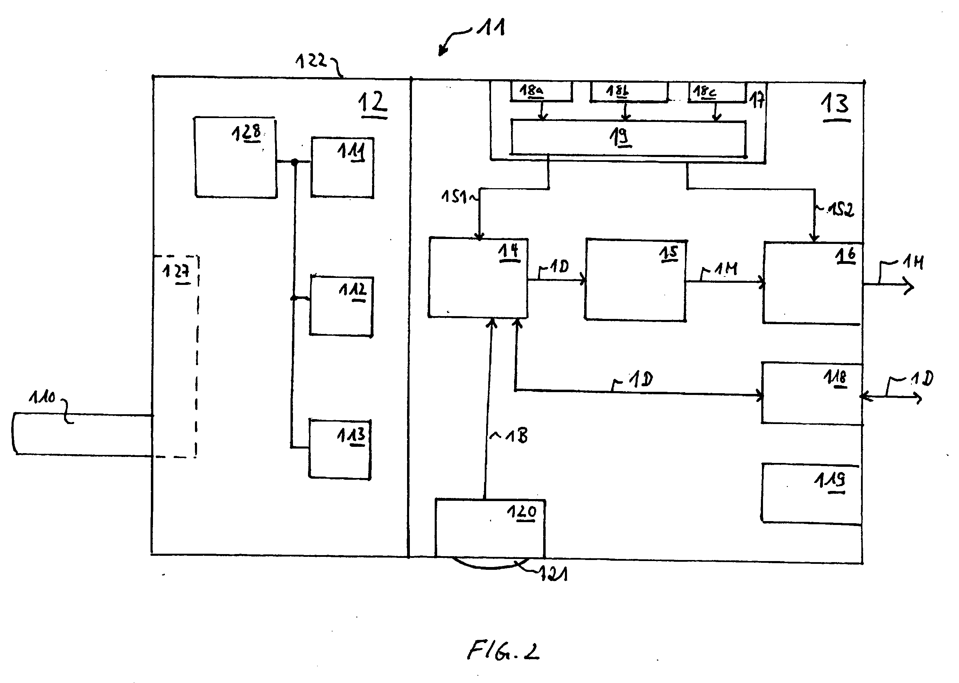

Figur 2 zeigt ein schematisches Blockschaltbild eines zweiten Ausführungsbeispiels des erfindungsgemäßen Schlüssels 11. Der erfindungsgemäße Schlüssel 11 weist die Schlüsselvorrichtung 12 sowie die Abspielvorrichtung 13 mit den Merkmalen gemäß Figur 1 auf.

Insbesondere weist die Abspielvorrichtung 13 eine Bedienvorrichtung 17 auf, mittels welcher ein Nutzer zumindest einen Steuerbefehl 1S1,1S2 zur Steuerung der Speichervorrichtung 14 und/oder der Wiedergabevorrichtung 16 eingibt und welche die Speichervorrichtung 14 und/oder die Wiedergabevorrichtung steuert. Die Bedienvorrichtung 17 weist vorzugsweise eine oder mehrere Funktionstasten 18a,18b,18c auf, über welche der Nutzer die Steuerbefehle 1S1, 1S2 eingeben kann. Die Funktionstasten 18a,18b,18c sind mit der Steuervorrichtung 19 gekoppelt. Die Steuervorrichtung 19 empfängt die von dem Nutzer eingegebenen Steuerbefehle 1S1, 1S2 und steuert mittels dieser die Speichervorrichtung 14 und/oder die Wiedergabevorrichtung 16. Zur Eingabe der Steuerbefehle 1S1, 1S2 kann die Bedienvorrichtung 17 auch eine Spracheingabevorrichtung (nicht gezeigt) aufweisen, welche zumindest ein Mikrofon und eine Spracherkennung beinhaltet. Die Spracherkennung kann beispielsweise in der Steuervorrichtung 19 integriert sein.

Vorzugsweise weist die Speichervorrichtung 14 einen Schreibe-/Lesespeicher (nicht gezeigt) und/oder einen Kartensteckplatz (nicht gezeigt) auf, in welchen eine Speicherkarte (nicht gezeigt) eingesteckt wird.

Die Abspielvorrichtung 13 weist weiterhin vorzugsweise eine Schnittstellenvorrichtung 118 auf, mittels welcher Daten, insbesondere die Unterhaltungsdateien 1D, in die Speichervorrichtung 14 geschrieben und aus der Speichervorrichtung 14 ausgelesen werden können. Die Schnittstellenvorrichtung 118 weist insbesondere eine USB-Schnittstelle und/eine Firewire-Schnittstelle und/oder eine drahtlose Schnittstelle auf.

Weiterhin weist die Abspielvorrichtung 13 eine Energieversorgungsvorrichtung 119 auf, welche insbesondere als eine Batterie oder als ein Akkumulator ausgebildet ist. Der Akkumulator ist insbesondere mittels einer weiteren Schnittstellenvorrichtung (nicht gezeigt) von extern aufladbar. Die Energieversorgungsvorrichtung 119 stellt vorteilhafterweise sicher, dass die Abspielvorrichtung 13 von der Schlüsselvorrichtung 12 elektrisch vollständig entkoppelt ist.

Des Weiteren weist der erfindungsgemäße mechanische und/oder elektronische Schlüssel 11 eine Fotovorrichtung 120 auf, welche zumindest eine Fotolinse 121 zum Aufnehmen eines Bildes 1B aufweist. Dabei ist die Fotovorrichtung 120 zumindest mit der Speichervorrichtung 14 zum Speichern des aufgenommenen Bildes 1B gekoppelt.

Gemäß dem Ausführungsbeispiel nach Figur 2 weist der Schlüssel 11 ein einziges Gehäuse 122 auf, das die Schlüsselvorrichtung 12 und die Abspielvorrichtung 13 aufnimmt.

Die Schlüsselvorrichtung 12 weist vorzugsweise einen Schlüsselbart 110 und/oder eine elektronische Zentralverriegelungsfunktion 111 und/oder eine elektronische Wegfahrsperrefunktion 112 und/oder eine elektronische Zündungsfunktion 113 auf. Dabei sind insbesondere die elektronische Zentralverriegelungsfunktion 111, die elektronische Wegfahrsperrefunktion 112 und die elektronische Zündungsfunktion 113 mit einer Sende-Empfangsvorrichtung 128 gekoppelt, welche eine drahtlose Verbindung zu dem Kraftfahrzeug bereitstellt. Insbesondere ist der Schlüsselbart 110 in das Gehäuse 122 des Schlüssels einklappbar. Dazu weist die Schlüsselvorrichtung 12 eine Aufnahmevorrichtung 127 auf, welche den Schlüsselbart 110 in eingeklappten Zustand aufnimmt.

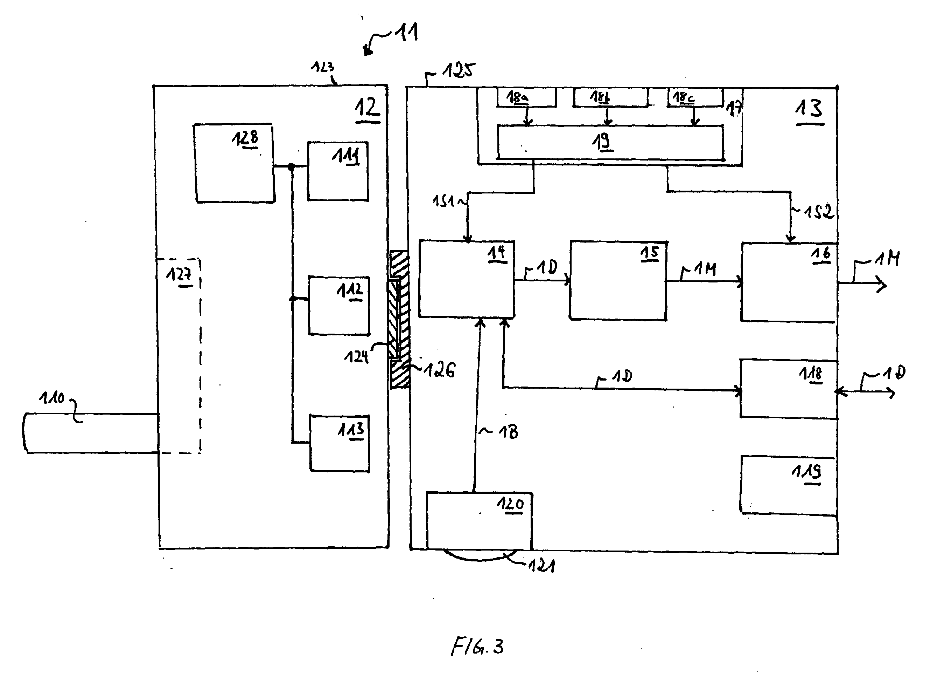

In Figur 3 ist ein schematisches Blockschaltbild eines dritten Ausführungsbeispiels des erfindungsgemäßen Schlüssels 11 dargestellt. Das dritte Ausführungsbeispiel gemäß Figur 3 unterscheidet sich von dem zweiten Ausführungsbeispiel 2 gemäß Figur 2 insbesondere darin, dass nicht ein einziges Gehäuse vorgesehen ist, das die Schlüsselvorrichtung 12 und die Abspielvorrichtung 13 aufnimmt, sondern dass sowohl für die Schlüsselvorrichtung 12 als auch für die Abspielvorrichtung 13 ein jeweils eigenes Gehäuse 123,125 vorgesehen wird.

Ein erstes Gehäuse 123 ist mit einem ersten Koppelelement 124 versehen und nimmt die Schlüsselvorrichtung 12 auf. Ein zweites Gehäuse 125 ist mit einem zweiten Koppelelement 126 versehen und nimmt die Abspielvorrichtung 13 auf. Die beiden Gehäuse 123,125 sind mittels der beiden Koppelelemente 124,126 mechanisch koppelbar. Figur 3 zeigt dabei den gekoppelten Zustand der beiden Koppelelemente 124,126. Insbesondere greifen die beiden Koppelelemente 124,126 bei der Koppelung ineinander. Für die beiden korrespondierenden Koppelelemente 124,126 sind beliebige Ausgestaltungsformen denkbar. Beispielsweise können die Koppelelemente 124,126 als Clips- oder Steckelemente ausgebildet sein.

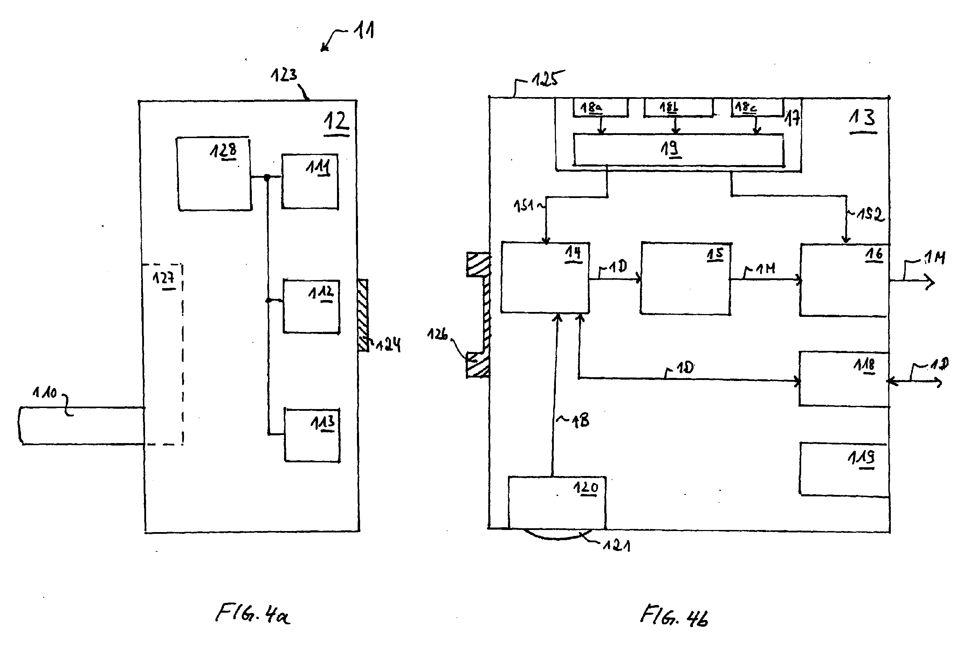

Die Figuren 4a und 4b zeigen den mechanischen und/oder elektronischen Schlüssel 11 gemäß der Figur 3 im nicht-gekoppelten Zustand. Dabei zeigt Figur 4a ein schematisches Blockschaltbild der mit der Abspielvorrichtung 13 koppelbaren Schlüsselvorrichtung 12. Entsprechend zeigt die Figur 4b ein schematisches Blockschaltbild der mit der Schlüsselvorrichtung 12 koppelbaren Abspielvorrichtung 13.

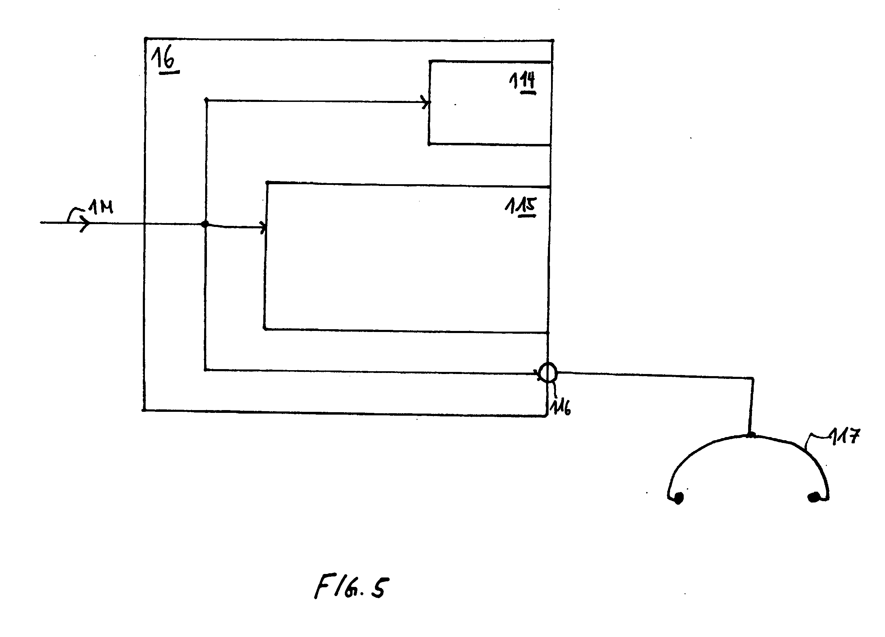

In Figur 5 ist ein schematisches Blockschaltbild eines bevorzugten Ausführungsbeispiels der Wiedergabevorrichtung 16 der Abspeichervorrichtung 13 gemäß der vorliegenden Erfindung dargestellt. Die Wiedergabevorrichtung 16 weist vorzugsweise einen Lautsprecher 114 und/oder ein Display 115 oder einen Monitor, insbesondere zur Anzeige und Wiedergabe von Fotos oder Videos, und/oder eine Steckerbuchse 116 auf. In die Steckerbuchse 116 ist beispielsweise ein Kopfhörer 117 oder ein externer Lautsprecher (nicht gezeigt) oder ein Verbindungskabel (nicht gezeigt) zum Anschluss an ein Infotainment-System des Kraftfahrzeuges einsteckbar. Aus Gründen der Platzersparnis kann das Display 115 auch als ein ein- und ausklappbares Display ausgebildet sein.

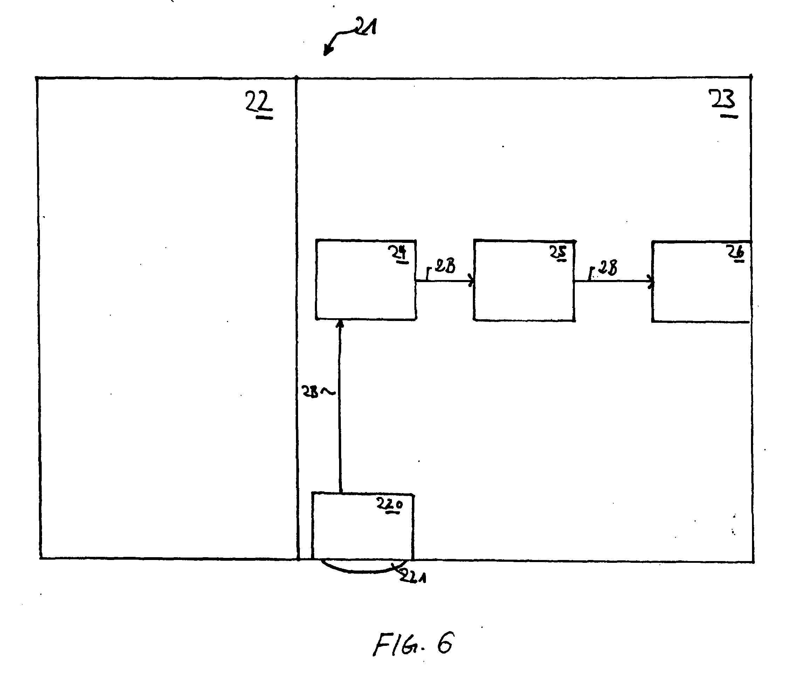

In Figur 6 ist ein schematisches Blockschaltbild eines vierten Ausführungsbeispiels des erfindungsgemäßen mechanischen und/oder elektronischen Schlüssels 21 für ein Kraftfahrzeug dargestellt.

Der mechanische und/oder elektronischer Schlüssel 21 weist eine Schlüsselvorrichtung 22 und eine Aufnahmevorrichtung 23 zum Aufnehmen von Bildern auf. Die Aufnahmevorrichtung 23 beinhaltet eine Fotovorrichtung 220 mit einer Fotolinse 221 und eine Speichervorrichtung 24. Die Fotovorrichtung 220 nimmt zumindest ein analoges Bild auf und wandelt dieses in eine digitale Bilddatei 2B. Die Speichervorrichtung 24 speichert zumindest die digitale Bilddatei 2B.

Die Schlüsselvorrichtung 22 ist zumindest dazu geeignet, das Kraftfahrzeug zu öffnen und zu schließen oder eine Zündung des Kraftfahrzeuges zu betätigen.

Vorzugsweise weist die Aufnahmevorrichtung 23 eine Wiedergabevorrichtung 26 auf, welche zumindest die digitale Bilddatei 2B visuell darstellt. Insbesondere ist zwischen der Wiedergabevorrichtung 26 und der Speichervorrichtung 24 eine Wandlervorrichtung 25 angeordnet, welche zumindest die digitale Bilddatei 2B in ein durch die Wiedergabevorrichtung 26 visuell darstellbares Format wandelt.

Weiterhin weist die Aufnahmevorrichtung 23 vorzugsweise ein Mikrophon 229 auf, das einen Schall aufnimmt und in eine digitale Audiodatei 2A wandelt, wobei die Speichervorrichtung 24 die digitale Audiodatei 2A speichert.

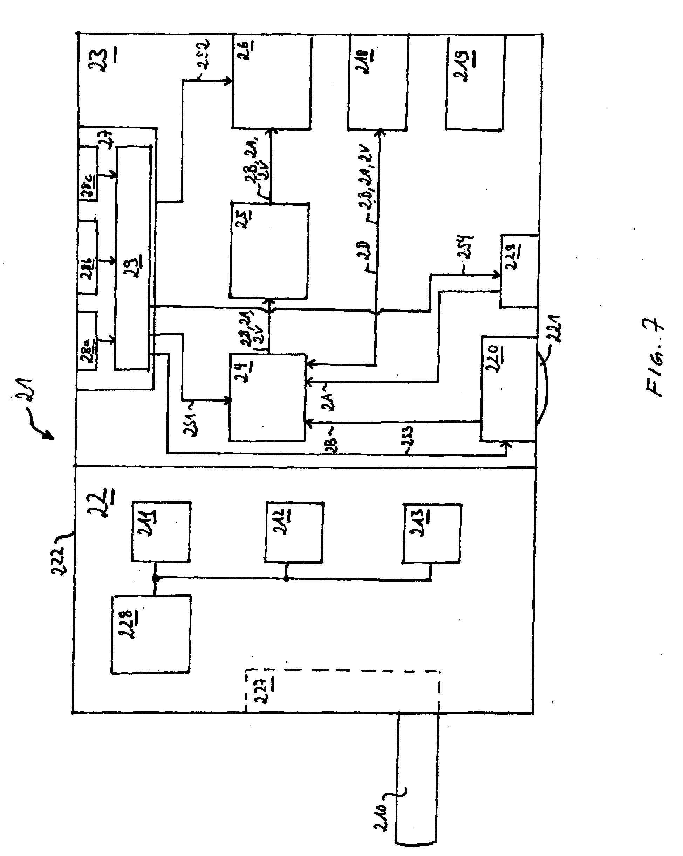

Figur 7 zeigt ein schematisches Blockschaltbild eines fünften Ausführungsbeispiels des erfindungsgemäßen Schlüssels 21. Der erfindungsgemäße Schlüssel 21 weist die Schlüsselvorrichtung 22 sowie die Aufnahmevorrichtung 23 mit den Merkmalen gemäß Figur 1 auf.

Insbesondere weist die Aufnahmevorrichtung 23 weiter eine Bedienvorrichtung 27 auf, mittels welcher zumindest ein Steuerbefehl 2S1, 2S2, 2S3, 2S4 zur Steuerung der Speichervorrichtung 24 oder der Wiedergabevorrichtung 26 und/oder der Fotovorrichtung 220 und/oder des Mikrophons 229 eingegeben wird. Dabei steuert eine Steuervorrichtung 29 der Bedienvorrichtung 27 die Speichervorrichtung 24 mittels des Steuersignals 2S1, die Wiedergabevorrichtung 26 mittels des Steuersignals 2S2, die Fotovorrichtung 220 mittels des Steuersignals 2S3 und das Mikrophon 229 mittels des Steuersignals 2S4. Die Bedienvorrichtung 27 weist vorzugsweise eine oder mehrere Funktionstasten 28a, 28b, 28c auf, über welche der Nutzer die Steuerbefehle 2S1, 2S2, 2S3, 2S4 eingeben kann. Die Funktionstasten 28a, 28b, 28c sind mit der Steuervorrichtung 29 gekoppelt. Zur Eingabe der Steuerbefehle 2S1, 2S2, 2S3, S4 kann die Bedienvorrichtung 27 auch eine Spracheingabevorrichtung (nicht gezeigt) aufweisen, welche zumindest eine Spracherkennung beinhaltet. Die Spracherkennung kann beispielsweise in der Steuervorrichtung 29 integriert sein. Insbesondere steuert die Steuervorrichtung 29 die Fotovorrichtung 220, das Mikrophon 229 und die Speichervorrichtung 24 mittels der Steuerbefehle 2S1, 2S3, 2S4 derart, dass die Speichervorrichtung 24 die von der Fotovorrichtung 220 aktuell bereitgestellte Bilddatei 2B und die von dem Mikrophon 229 aktuell bereitgestellte Audiodatei 2A synchronisiert als eine Videodatei 2V abspeichert.

Vorzugsweise weist die Speichervorrichtung 24 einen Schreibe-/Lesespeicher (nicht gezeigt) und/oder einen Kartensteckplatz (nicht gezeigt) auf, in welchen eine Speicherkarte (nicht gezeigt) eingesteckt wird.

Die Aufnahmevorrichtung 23 weist weiterhin vorzugsweise eine Schnittstellenvorrichtung 218 auf, mittels welcher Daten in die Speichervorrichtung 24 geschrieben und aus der Speichervorrichtung 24 ausgelesen werden können. Die Schnittstellenvorrichtung 218 weist insbesondere eine USB-Schnittstelle und/eine Firewire-Schnittstelle und/oder eine drahtlose Schnittstelle auf.

Weiterhin weist die Aufnahmevorrichtung 23 eine Energieversorgungsvorrichtung 219 auf, welche insbesondere als eine Batterie oder als ein Akkumulator ausgebildet ist. Der Akkumulator ist insbesondere mittels einer weiteren Schnittstellenvorrichtung (nicht gezeigt) von extern aufladbar. Die Energieversorgungsvorrichtung 219 stellt vorteilhafterweise sicher, dass die Aufnahmevorrichtung 23 von der Schlüsselvorrichtung 22 elektrisch vollständig entkoppelt ist.

Gemäß dem Ausführungsbeispiel nach Figur 7 weist der Schlüssel 21 ein einziges Gehäuse 222 auf, das die Schlüsselvorrichtung 22 und die Aufnahmevorrichtung 23 aufnimmt.

Die Schlüsselvorrichtung 22 weist vorzugsweise einen Schlüsselbart 210 und/oder eine elektronische Zentralverriegelungsfunktion 211 und/oder eine elektronische Wegfahrsperrefunktion 212 und/oder eine elektronische Zündungsfunktion 213 auf. Dabei sind insbesondere die elektronische Zentralverriegelungsfunktion 211, die elektronische Wegfahrsperrefunktion 212 und die elektronische Zündungsfunktion 213 mit einer Sende-Empfangsvorrichtung 228 gekoppelt, welche eine drahtlose Verbindung zu dem Kraftfahrzeug bereitstellt. Insbesondere ist der Schlüsselbart 210 in das Gehäuse 222 des Schlüssels einklappbar. Dazu weist die Schlüsselvorrichtung 22 ein Schlüsselbartgehäuse 227 auf, welches den Schlüsselbart 210 im eingeklappten Zustand aufnimmt.

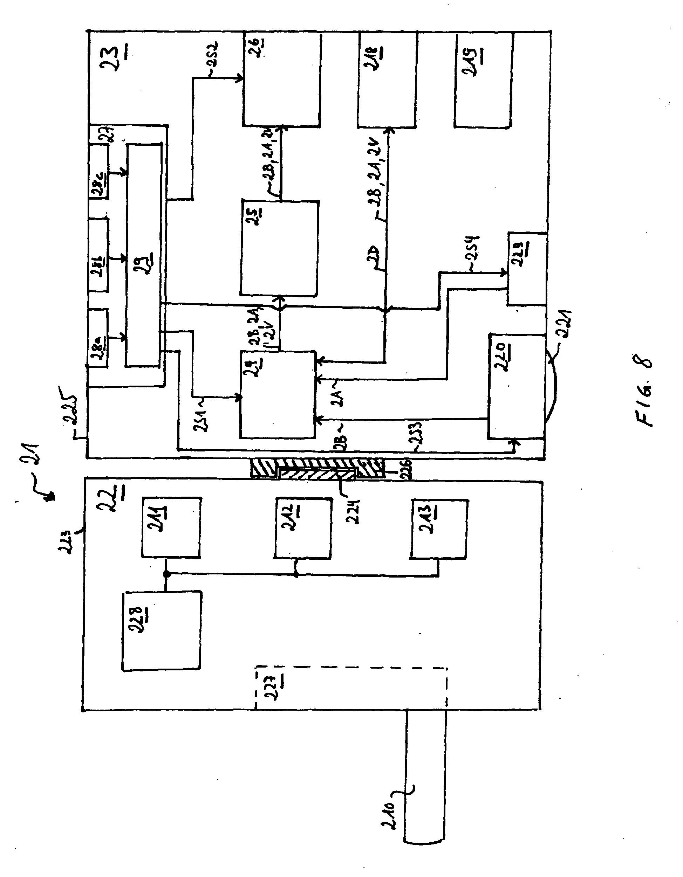

In Figur 8 ist ein schematisches Blockschaltbild eines dritten Ausführungsbeispiels des erfindungsgemäßen Schlüssels 21 dargestellt. Das sechste Ausführungsbeispiel gemäß Figur 8 unterscheidet sich von dem fünften Ausführungsbeispiel gemäß Figur 7 insbesondere darin, dass nicht ein einziges Gehäuse vorgesehen ist, das die Schlüsselvorrichtung 22 und die Aufnahmevorrichtung 23 aufnimmt, sondern dass sowohl für die Schlüsselvorrichtung 22 als auch für die Aufnahmevorrichtung 23 ein jeweils eigenes Gehäuse 223,225 vorgesehen wird.

Ein erstes Gehäuse 223 ist mit einem ersten Koppelelement 224 versehen und nimmt die Schlüsselvorrichtung 22 auf. Ein zweites Gehäuse 225 ist mit einem zweiten Koppelelement 226 versehen und nimmt die Aufnahmevorrichtung 23 auf. Die beiden Gehäuse 223,225 sind mittels der beiden Koppelelemente 224,226 mechanisch koppelbar. Figur 8 zeigt dabei den gekoppelten Zustand der beiden Koppelelemente 224,226. Insbesondere greifen die beiden Koppelelemente 224,226 bei der Koppelung ineinander. Für die beiden korrespondierenden Koppelelemente 224,226 sind beliebige Ausgestaltungsformen denkbar. Beispielsweise können die Koppelelemente 224,226 als Clips- oder Steckelemente ausgebildet sein.

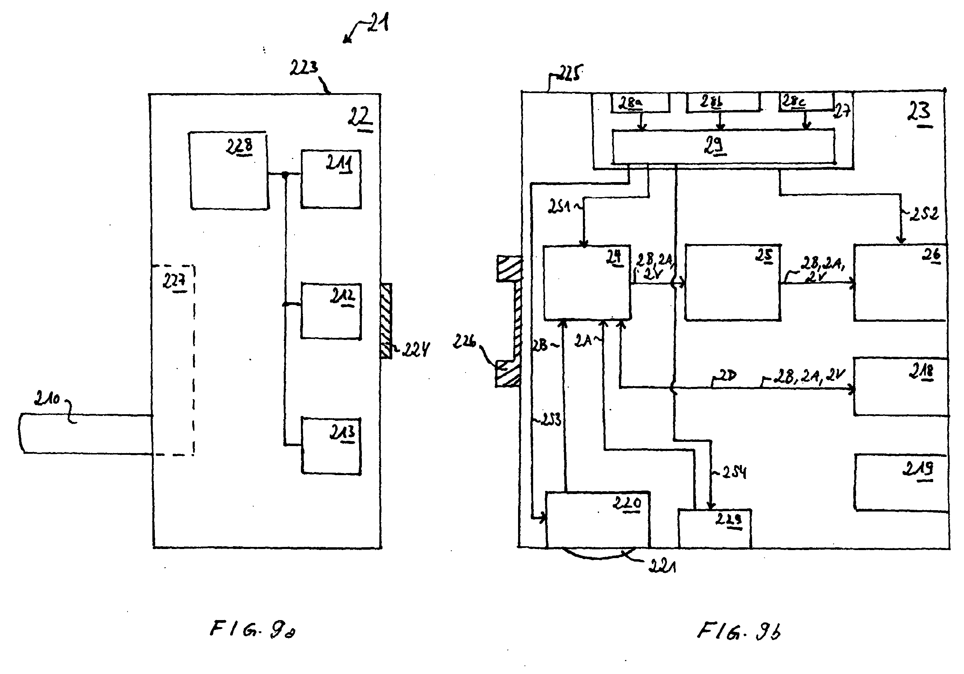

Die Figuren 9a und 9b zeigen den mechanischen und/oder elektronischen Schlüssel 21 gemäß der Figur 8 im nicht-gekoppelten Zustand. Dabei zeigt Figur 9a ein schematisches Blockschaltbild der mit der Aufnahmevorrichtung 23 koppelbaren Schlüsselvorrichtung 22. Entsprechend zeigt die Figur 9b ein schematisches Blockschaltbild der mit der Schlüsselvorrichtung 22 koppelbaren Aufnahmevorrichtung 23.

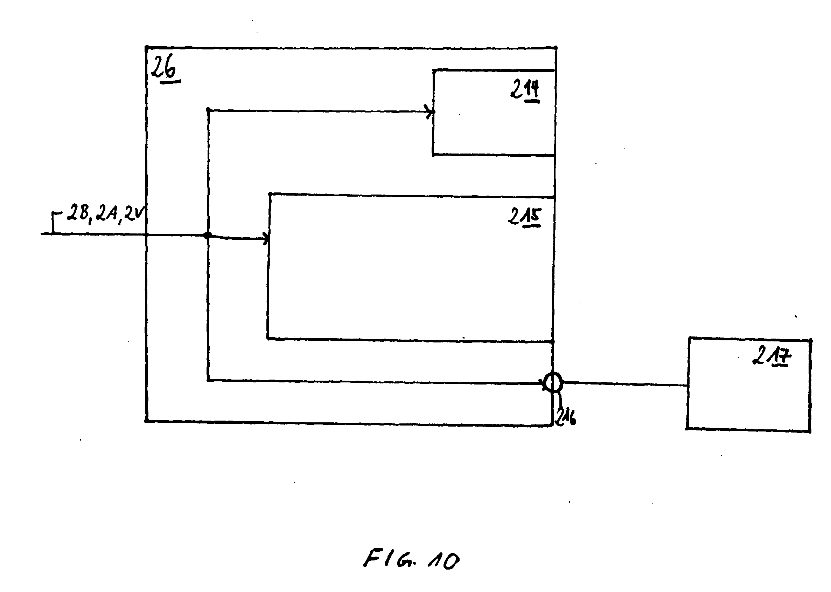

In Figur 10 ist ein schematisches Blockschaltbild eines bevorzugten Ausführungsbeispiels der Wiedergabevorrichtung 26 der Aufnahmevorrichtung 23 gemäß der vorliegenden Erfindung dargestellt. Die Wiedergabevorrichtung 26 weist vorzugsweise einen Lautsprecher 214 und/oder ein Display 215 oder einen Monitor, insbesondere zur Anzeige und Wiedergabe von Fotos oder Videos, und/oder eine Steckerbuchse 216 auf. In die Steckerbuchse 216 ist beispielsweise ein externer Lautsprecher (nicht gezeigt) oder ein Verbindungskabel zum Anschluss an ein Infotainment-System 217 des Kraftfahrzeuges einsteckbar. Aus Gründen der Platzersparnis kann das Display 215 auch als ein ein- und ausklappbares Display ausgebildet sein.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar.

So ist es beispielsweise denkbar, in der Abspielvorrichtung und/oder der Aufnahmevorrichtung mehrere Displays, wobei ein Display Bilddaten, wie Fotos oder Videos, und ein zweites Display Steuerinformationen anzeigen kann, oder mehrere Speichervorrichtungen zu integrieren.

Auch andere Speicherformate und Schnittstellenstandards wären denkbar.

## Patentansprüche

1. Mechanischer und/oder elektrischer Schlüssel (11, 21) für ein Kraftfahrzeug, der dazu ausgelegt ist, zumindest das Kraftfahrzeug zu verriegeln und zu entriegeln und/oder eine Zündung des Kraftfahrzeuges zu betätigen,
(a) mit einem Schlüsselbart (110, 210),
(b) mit einer Abspielvorrichtung (13) zum Abspielen von Unterhaltungsmedien (11), enthaltend:
(b1) eine elektronische Speichervorrichtung (14), welche dazu ausgelegt ist, zumindest eine Unterhaltungsdatei (1D) zu speichern,
(b2) eine Wandlervorrichtung (15), welche dazu ausgelegt ist, die gespeicherte Unterhaltungsdatei (1D) in ein abspielbares Unterhaltungsmedium zu wandeln, und
(b3) eine Wiedergabevorrichtung (16), welche dazu ausgelegt ist, das abspielbare Unterhaltungsmedium wiederzugeben,
**gekennzeichnet durch**
(c) ein Gehäuse, in welchem sowohl der Schlüsselbart und als auch die Abspielvorrichtung aufgenommen sind.

2. Schlüssel nach Anspruch 1, **dadurch gekennzeichnet, dass** die Wiedergabevorrichtung einen Lautsprecher (114) und/oder ein Display (115) und/oder eine Steckerbuchse (116) aufweist, in welche ein Kopfhörer (117) und/oder in welche ein externer Lautsprecher und/oder in welche ein Verbindungskabel zum Anschluss an ein Infotainment-System des Kraftfahrzeuges einsteckbar ist/sind.

3. Schlüssel nach einem oder mehreren der vorstehenden Ansprüche, **dadurch gekennzeichnet, dass** der Schlüssel (11, 21) eine Aufnahmevorrichtung (23) zum Aufnehmen von Bildern (1B) aufweist.

4. Schlüssel nach Anspruch 3, **dadurch gekennzeichnet, dass** die Aufnahmevorrichtung eine Fotovorrichtung (120) mit einer Fotolinse (121) aufweist, welche dazu ausgelegt ist, zumindest ein analoges Bild (1B) aufzunehmen und in eine digitale Bilddatei (2B) zu wandeln und/oder eine Speichervorrichtung (24) aufweist, welche dazu ausgelegt ist, zumindest die digitale Bilddatei zu speichern.

5. Schlüssel nach Anspruch 4, **dadurch gekennzeichnet, dass** die Aufnahmevorrichtung eine optische Wiedergabevorrichtung (26) aufweist, welche die digitale Bilddatei visuell darstellt.

6. Schlüssel nach Anspruch 4 oder 5, **dadurch gekennzeichnet, dass** eine Wandlervorrichtung (25) zwischen der Speichervorrichtung und der Wiedergabevorrichtung angeordnet ist, welche die digitale Bilddatei in ein durch die Wiedergabevorrichtung visuell darstellbares Format wandelt.

7. Schlüssel nach einem oder mehreren der Ansprüche 3 bis 6, **dadurch gekennzeichnet, dass** die Aufnahmevorrichtung ein Mikrophon (229) aufweist, welches ein akustisches Signal aufnimmt und in eine digitale Audiodatei wandelt und die Speichervorrichtung die digitale Audiodatei speichert.

8. Schlüssel nach einem oder mehreren der vorstehenden Ansprüche, **dadurch gekennzeichnet, dass** die Abspieleinrichtung und/oder die Aufnahmevorrichtung eine Bedienvorrichtung (17) aufweist, mittels welcher zumindest ein Steuerbefehl zur Steuerung der Speichervorrichtung und/oder der Wiedergabevorrichtung und/oder der Fotovorrichtung und/oder des Mikrophons eingebbar ist und welche dazu ausgelegt ist, die Speichervorrichtung und/oder die Wiedergabevorrichtung und/oder die Fotovorrichtung und/oder das Mikrophon zu steuern.

9. Schlüssel nach einem oder mehreren der vorstehenden Ansprüche, **dadurch gekennzeichnet, dass** die Abspielvorrichtung und/oder die Aufnahmeeinrichtung eine Schnittstellenvorrichtung (118, 218) aufweist, die so angeordnet ist, dass mittels der Schnittstellenvorrichtung Daten in die Speichervorrichtung schreibbar sind und/oder aus der Speichervorrichtung auslesbar sind.

10. Schlüssel nach einem oder mehreren der vorstehenden Ansprüche, **dadurch gekennzeichnet, dass** ein einziges Gehäuse (122, 222) vorgesehen ist, welches sowohl den Schlüsselbart als auch die Abspielvorrichtung und/oder die Aufnahmevorrichtung aufnimmt.

11. Schlüssel nach einem oder mehreren der Ansprüche 1 bis 9, **dadurch gekennzeichnet, dass** ein erstes Gehäuseteil (123, 223) zur Aufnahme des Schlüsselbarts und ein zweites, vom ersten Gehäuseteil unterschiedliches Gehäuseteil (125, 225) zur Aufnahme der Abspielvorrichtung und/oder zur Aufnahme der Aufnahmevorrichtung vorgesehen ist, wobei das erste und zweite Gehäuseteil über eine mechanische Koppelvorrichtung(124, 224) des Schlüssels miteinander gekoppelt sind.

## Claims

1. A mechanical and/or electric key (11, 21) for a motor vehicle, which key (11, 21) is designed at least for locking and unlocking the motor vehicle and/or actuating an ignition of the motor vehicle, comprising
(a) a key bit (110, 210);
(b) a playback apparatus (13) for playing back entertainment media (11), containing:
(b1) an electronic storage apparatus (14) which is designed for storing at least one entertainment file (1D);
(b2) a converter apparatus (15) which is designed to convert the stored entertainment file (1D) into a playable entertainment medium, and
(b3) a reproducing apparatus (16) which is designed to reproduce the playable entertainment medium;
**characterized by**
(c) a housing in which both the key bit and the playback apparatus are accommodated.

2. A key according to claim 1, **characterized in that** the reproducing apparatus comprises a loudspeaker (114) and/or a display (115) and/or a plug socket (116) in which a headphone (117) and/or in which an external loudspeaker and/or in which a connecting cable for connection to an infotainment system of the motor vehicle is/are insertable.

3. A key according to one or several of the preceding claims, **characterized in that** the key (11, 21) has a recording apparatus (23) for taking pictures (1B).

4. A key according to claim 3, **characterized in that** the recording apparatus is a photographic apparatus (120) with a photographic lens (121) which is designed to take at least one analog picture (1B) and to convert the same into a digital image file (2B), and/or comprises a storage apparatus (24) which is designed to store at least the digital image file.

5. A key according to claim 4, **characterized in that** the recording apparatus comprises an optical reproducing apparatus (26) which visually displays the digital image file.

6. A key according to claim 4 or 5, **characterized in that** a converter apparatus (25) is arranged between the storage apparatus and the reproducing apparatus which converts the digital image file into a format that can be visually displayed by the reproducing apparatus.

7. A key according to one or several of the claims 3 to 6, **characterized in that** the recording apparatus comprises a microphone (229) which records an acoustic signal and converts the same into a digital audio file, and the storage apparatus stores the digital audio file.

8. A key according to one or several of the preceding claims, **characterized in that** the playback device and/or the recording apparatus comprises a control apparatus (17), by means of which at least one control command for controlling the storage apparatus and/or the reproducing apparatus and/or the photographic apparatus and/or the microphone can be entered, and which is designed to control the storage apparatus and/or the reproducing apparatus and/or the photographic apparatus and/or the microphone.

9. A key according to one or several of the preceding claims, **characterized in that** the playback apparatus and/or the recording apparatus comprise an interface apparatus (118, 218) which is arranged in such a way that data can be written into the storage apparatus and/or can be read from the storage apparatus by means of the interface apparatus.

10. A key according to one or several of the preceding claims, **characterized in that** a single housing (122, 222) is provided which accommodates both the key bit and the playback apparatus and/or the recording apparatus.

11. A key according to one or several of the claims 1 to 9, **characterized in that** a first housing part (123, 223) is provided for accommodating the key bit and a second housing part (125, 225) which differs from the first housing part for accommodating the playback apparatus and/or for accommodating the recording apparatus, with the first and second housing part being coupled with one another via a mechanical coupling apparatus (124, 224) of the key.

## Revendications

1. Clé mécanique et/ou électrique (11, 21) pour un véhicule à moteur, conçue au moins pour verrouiller et déverrouiller le véhicule à moteur et/ou actionner un allumage du véhicule à moteur,
(a) avec un panneton (110,210),
(b) avec un dispositif de lecture (13) pour la lecture de médias de divertissement (11), contenant :
(b1) un dispositif de stockage électronique (14) conçu pour stocker au moins un fichier de divertissement (1D),
(b2) un dispositif convertisseur (15) conçu pour convertir le fichier de divertissement stocké (1D) en un média de divertissement lisible, et
(b3) un dispositif de restitution (16) conçu pour restituer le média de divertissement lisible,
**caractérisée en ce qu'**elle comprend
(c) un boîtier dans lequel sont logés aussi bien le panneton que le dispositif de lecture.

2. Clé selon la revendication 1, **caractérisée en ce que** le dispositif de restitution comporte un haut-parleur (114) et/ou un afficheur (115) et/ou un connecteur femelle (116) dans lequel un casque audio (117) et/ou un haut-parleur externe et/ou un câble de liaison pour le raccordement à un système multimédia de bord du véhicule peuvent être branchés.

3. Clé selon une ou plusieurs des revendications précédentes, **caractérisée en ce que** la clé (11, 21) présente un dispositif d'acquisition (23) pour l'acquisition d'images (1B).

4. Clé selon la revendication 3, **caractérisée en ce que** le dispositif d'acquisition comprend un dispositif photographique (120) avec un objectif photographique (121) conçu pour acquérir au moins une image analogique (1B) et la convertir en un fichier d'image numérique (2B) et/ou un dispositif de stockage (24) conçu pour stocker au moins le fichier d'image numérique.

5. Clé selon la revendication 4, **caractérisée en ce que** le dispositif d'acquisition comprend un dispositif de restitution optique (26) qui visualise le fichier d'image numérique.

6. Clé selon la revendication 4 ou 5, **caractérisée en ce qu'**un dispositif convertisseur (25) est disposé entre le dispositif de stockage et le dispositif de restitution et convertit le fichier d'image numérique en un format pouvant être visualisé par le dispositif de restitution.

7. Clé selon une ou plusieurs des revendications 3 à 6, **caractérisée en ce que** le dispositif d'acquisition comprend un microphone (229) qui capte un signal acoustique et le convertit en un fichier audio numérique et le dispositif de stockage stocke le fichier audio numérique.

8. Clé selon une ou plusieurs des revendications précédentes, **caractérisée en ce que** le dispositif de lecture et/ou le dispositif d'acquisition présentent un dispositif de commande (17) au moyen duquel au moins un ordre de commande pour la commande du dispositif de stockage et/ou du dispositif de restitution et/ou du dispositif photographique et/ou du microphone peut être saisi et qui est conçu pour commander le dispositif de stockage et/ou le dispositif de restitution et/ou le dispositif photographique et/ou le microphone.

9. Clé selon une ou plusieurs des revendications précédentes, **caractérisée en ce que** le dispositif de lecture et/ou le dispositif d'acquisition présentent un dispositif d'interface (118, 218) disposé de telle façon que des données puissent être écrites dans le dispositif de stockage ou lues à partir du dispositif de stockage au moyen du dispositif d'interface.

10. Clé selon une ou plusieurs des revendications précédentes, **caractérisée en ce qu'**un seul boîtier (122, 222) est prévu pour loger aussi bien le panneton que le dispositif de lecture et/ou le dispositif d'acquisition.

11. Clé selon une ou plusieurs des revendications 1 à 9, **caractérisée en ce qu'**une première partie de boîtier (123, 223) est prévue pour recevoir le panneton et une deuxième partie de boîtier (125, 225) différente de la première partie de boîtier pour recevoir le dispositif de lecture et/ou pour recevoir le dispositif d'acquisition, la première partie de boîtier et la deuxième étant couplées entre elles par un dispositif de couplage mécanique (124, 224) de la clé.
